# EUROPEAN PATENT SPECIFICATION

(11) **EP 3 896 404 B1**
(45) Date of publication and mention of the grant of the patent: **19.11.2025**
(21) Application number: 21194052.3
(22) Date of filing: 31.08.2021
(51) Int. Cl.: G01F 1/66, G01F 15/14, B33Y 10/00, B33Y 40/20, B33Y 70/10, B33Y 80/00, G01F 15/18

(54) **ULTRASONIC FLOW METER**
ULTRASCHALLDURCHFLUSSMESSER
DÉBITMÈTRE À ULTRASONS

(30) Priority: 01.09.2020 DK PA202070565
(43) Date of publication of application: 20.10.2021
(73) Proprietor: Kamstrup A/S, 8660 Skanderborg (DK)
(72) Inventor:
(74) Representative: Plougmann Vingtoft a/s

(56) References cited:
- EP-A1- 3 401 649
- EP-A1- 3 617 665
- WO-A1-2020/216989
- DE-A1- 102008 039 464
- US-A- 5 131 278
- US-A1- 2018 245 958
- US-A1- 2020 103 262

## Description

### Field of the Invention

The present invention relates to ultrasonic flow meters and a method of manufacturing such flow meters. The flow meters described herein are used for heat metering or for cold water metering.

### Background of the Invention

In typical mass production of ultrasonic flow meters the use of machined matrices for injection moulding of housings, flow tubes and measuring tubes limit the number of product variants to be made due to the cost of the matrices. By manufacturing the flow meter in a 3D printing process, however, the flow meter can be tailored to the specifications of the customer. Additive manufacturing 3D processes of today comprises a multitude of different technologies used for additive manufacturing and provides well-known advantages such as the opportunity of creating structures and profiles not obtainable in normal injection moulding processes or obtaining savings in the amount of materials used by combining finite element strength analysis and 3D printing.

EP 3 401 649 A1 discloses an ultrasonic flow meter for measuring a flow rate of a fluid. The meter has a polymeric housing forming a flow tube with a through-going opening and first and second fluid openings for passage of a fluid between an inlet and an outlet. The flow meter has surfaces on the outer surface of the flow tube for receiving ultrasonic transducers. The ultrasonic transducers are arranged for transmitting and receiving ultrasonic signals through the flow tube wall.

Not surprisingly the flow meter industry has been hesitating to replace conventional injection moulding with additive manufacturing processes because the latter at the moment is a comparatively slow process. However, this has in the eyes of the Applicant led to a lack of innovation in the area of ultrasonic flow meters and 3D printing. It is against this background that the current invention aims at utilizing the advantages obtainable by additive manufacturing in the design and manufacture of ultrasonic flow meters.

### Object of the Invention

An object of the invention is to improve the quality of signals transmitted and received by ultrasonic transducers in flow meters.

A further objective of the invention is to improve the mechanical design of the housing and/or the flow tube of an ultrasonic flow meter by way of additive manufacturing.

### Summary of the Invention

The invention takes its offset in the use of powder bed fusion manufacturing processes such as selective laser sintering (SLS) or MultiJet Fusion process (MJF). These processes can be used when manufacturing an ultrasonic flow meter comprising:
a flow tube comprising an inlet, an outlet, a through-going opening for passage of a fluid between the inlet and the outlet and a flow tube wall with an inner surface and an outer surface; transducer seats arranged at the outer surface of the flow tube wall for receiving ultrasonic transducers; and ultrasonic transducers arranged at the transducer seats for transmitting and receiving ultrasonic signals through the flow tube wall into the fluid in the through-going opening. The invention is characterized in that the flow tube or parts of the flow tube is manufactured in a 3D printing process and contains a section with an acoustic impedance conditioner, said section having one or more cavities formed in the 3D printing process.

This design has the technical effect that the acoustic impedance seen by ultrasonic signals generated and received by ultrasonic transducers is determined and influenced by a mechanical acoustic impedance conditioner. The acoustic impedance conditioner can enhance or minimize attenuation of the desired signals by causing a lower acoustic impedance or providing a impedance matching between transducers, the flow tube wall and the fluid flowing in the flow tube. In the same way the acoustic impedance conditioner can reduce the amplitude of undesired noise signals by increasing the impedance or introduce impedance mismatching in sections of the flow tube wall where the undesired noise signals propagates. Impedance matching between the ultrasonic transducers, the flow tube wall and the fluid flowing in the flow tube may be assured by adapting the dimensions of the flow tube wall to the frequency of the ultrasonic signal and the speed of sound in the flow tube wall. Undesired noise signals are signals running in the flow tube wall from one ultrasonic transducer to the next and these signals cause an error in the measurement result. By utilizing the design freedom of 3D printing technology, especially SLS or MJF, cavities can be built into the ultrasonic transmission paths of the flow meter or cavities can be placed outside the transmission paths and act as barriers against undesired noise signals. The cavities will have an acoustic impedance different from the acoustic impedance of the material of the flow tube, for that reason the cavities will cause at least a partial reflection of the ultrasonic signals. The cavities are as such understood as acoustic impedance conditioners. Especially an air filled cavity or a cavity filled with unsintered powder from the 3D printing process will have an acoustic impedance very different from the acoustic impedance of the sintered 3D powder and will cause a significant impedance mismatch causing reflection of ultrasonic signals propagating through the sintered material when meeting the cavities. An ultrasonic flow meter can have one or more sections with such acoustic impedance conditioner. The invention particularly utilizes the 3D printer design freedom, that a sintering process can be stopped at one position of the flow tube and continued at a second position of the flow tube, the first and second positions being different. This "stop and go" gives the possibility of leaving parts of the flow tube - or other parts of the flow meter - unsintered, hereby enabling the ultrasonic signals to travel through material parts with varying acoustic impedance. In this way the acoustic impedance seen by the ultrasonic transducers can be customized and optimized.

Acoustic impedance is a measure of the opposition that a system presents to the acoustic flow resulting from an acoustic pressure applied to the system. The SI unit of acoustic impedance is the pascal second per cubic metre (Pays/m3).

The fluid in the throughgoing opening also referred to as the fluid flowing in the flow tube is in the case of a flow meter for a water consumption meter or an energy meter for heating or cooling understood to be a liquid. The fluid or liquid may be any kind of water such as potable water, irrigation water, waste water or heated water for district heating other liquids suitable for heat energy transfer may be used as well. The fluid or liquid may be a mixture of different liquids or water treated to reduce corrosion of pipes.

"Cavities" are to be understood as closed spheres or a closed space which either contains air or contains unsintered powder. The cavities may also contain an combination of air and unsintered powder. "Cavities" may also be understood as open channels or closed channels or an open space. A cavity may be open towards the inner surface or the outer surface of the flow tube wall. Such open cavities may contain the fluid flowing in the flow tube. The cavities may be formed as a slot or fissure in the material. The cavities form a gap in the material of the flow tube wall.

The ultrasonic flow meter 1 may further comprise a housing 5 with an interior room 4 arranged for shielding the one or more of the control circuit 56, printed circuit boards 55, 60, battery 11, ultrasonic transducer 25, 26 from the surroundings. The housing 5 has an opening which is closed off by a lid 10. The lid may be made from a transparent material such as glass or a transparent polymer.

The material used for 3D printing of the inventive ultrasonic flow meter can be conventional polyamide such as PA11, PA12, PEEK or blended PEEK/PA12 or other types. The material may be a composite polymer comprising one or more fillers such as glass, carbon, or aluminium-based fillers. PPS is due to a high mechanical strength a suitable material for 3D printing the ultrasonic flow meter, especially a PPS based composite comprising 20-60 % glass or carbon filler is advantageous in that it combines high mechanical strength with and low dissolvability in water and low water ingress in the meter housing. PPS with 40% glass fibre filler is an advantageous material choice for flow tubes. Parameters influencing the acoustic impedance are the powder material or a mix of powder materials, the powder grain size and its morphology, the amount of filler, the density of the powder, the shape and volume of the cavities and whether the cavities are hollow or not, whether the powder is sintered or not sintered. Also the thickness of the 3D printed layers and the thickness of the flow tube wall or of the reflector. Layer thickness in the range from 15 - 500 µm may be chosen in a compromise between desired material properties and process speed. The transmission frequency of the ultrasonic transducer is also a parameter. In principle the frequency could be adapted to the acoustic impedance as seen from the transducer by sweeping the frequency and choose exactly that frequency which gives the best quality signal received. However, the flow metering manufacturers have for years settled on a signal frequency of 1 MHz and any optimization of the acoustic impedance would have to start from this point.

The section with the acoustic impedance conditioner is placed in the flow tube wall at a position where a transducer seat is placed or close to a transducer seat. In this way the influencing and shaping of the signal has most effect. The section can be placed exactly below the transducer seat or extend beyond the sides of the transducers. An acoustic impedance conditioner section can be placed under just one of the transducer seats or under both transducer seats. Further, a section can be placed in the flow tube wall in-between the two transducer seats.

Advantageously the one or more cavities in the flow tube wall are arranged around a signal transmission path of the flow tube wall. This is done to shield the ultrasonic transducer from undesired acoustic waves traveling in the flow tube wall in a longitudinal direction between the inlet and the outlet of the flow tube. Such undesired signals may arise from ringing of the transmitting transducer. The signal transmission path goes from ultrasonic transducer via the seat through the flow tube wall. With this shield the path is protected against incoming disturbing signals but also disturbing signals generated by the ultrasonic transducer itself are contained by the cavities arranged around the path.

The signal transmission path is understood as the desired signal transmission path extending from the transducer seats to the inner wall of the flow tube where the ultrasonic signals travels between the wall of the flow tube and the fluid flowing in the flow tube. The signal transmission path is an area or part of the flow tube wall wherein the ultrasonic signals travel. One or more cavities may be arranged in the flow tube wall in the area of the signal transmission path.

In a further advantageous embodiment the cavities in the flow tube wall are arranged inside the signal transmission path. Hereby a focusing grid is created which guides or promotes the acoustic waves propagating in a direction perpendicular to a plane spanned by the transducer seat. The focusing grid further attenuates undesired acoustic waves propagating in a direction not perpendicular to the plane spanned by the transducer seat, i.e. dampens the noise signals or ringings travelling from one transducer to the next. The focusing grid is formed as elongated parallel tubes, gaps or fissures placed in the transmission path and extending from an outer flow tube wall surface to an inner flow tube wall surface, they may be closed or open towards the inner and / or the outer surface of the flow tube wall Other geometries of the cavities are possible. One or more cavities can be placed underneath the seat in an axial direction of the flow meter. The thickness of the cavities can be varied as well as the composition of the grains of the powder. By dimensioning correctly, the ultrasonic transducer sees an acoustic impedance which is matched to the impedance of the fluid, hence optimizing signal amplitude and signal quality.

The section with the acoustic impedance conditioner may comprise both a signal enhancing region, such as a signal focusing region, and an error signal attenuating region. Hereby the signal transmitted is improved in amplitude and quality and at the same time protected against an undesired noise signal from the other transducer. This has the effect that the signal to noise ratio of the received ultrasonic signal is increased.

In a further embodiment the flow tube of the ultrasonic flow meter comprises a reflector placed in the through-going opening of the flow tube. The reflector has an acoustic impedance conditioner placed underneath a reflector surface which reflector surface consists of sintered powder material. This design has the advantage that a discrete mirror used as a reflecting surface is not needed. Typically such mirrors are thin steel foils which have to be placed and fixated on the reflector in a separate working cycle. The acoustic impedance conditioner below the reflecting surface is designed to meet the signal with an acoustic impedance different from the acoustic impedance of the reflector surface and the fluid flowing in the flow tube. The acoustic impedance conditioner creates a impedance mismatch between the reflector and the fluid of the flow tube whereby ultrasonic signals traveling through the fluid will be reflected when meeting the reflector surface and the acoustic impedance conditioner.

The section of the reflector with the acoustic impedance conditioner can comprise a closed cavity which is filled with unsintered powder. The acoustic impedance of an empty cavity or a cavity filled with unsintered powder is very different from the acoustic impedance of sintered powder and the acoustic impedance of the fluid flowing in the flow tube, whereby ultrasonic signals travelling through the fluid of the flow tube and meeting the reflector surface with a cavity beneath are reflected. The grains of the powder act as a multitude of reflecting surfaces and will cause the signal to lose energy. In another variant the section comprises an open cavity which is accessible to the fluid or liquid of the through-going opening. Multiple cavities in the section can be stacked above each other and separated by one or more walls. These walls have preferably the same inclination as the reflecting surface but in principle any shape of the cavities can be used as long as they provide a large acoustic impedance towards the incoming signal.

The reflector surface may have a signal reflectivity that is higher than the signal absorptivity of the reflector material.

In a further embodiment the at least one reflector is seamlessly and materially integrated with the flow tube and the reflecting surface is a part of the inner surface of the flow tube.

Alternatively, the reflector is part of a flow tube insert which is inserted into the through-going opening. The flow tube insert is then locked into a position below the transmission path of the ultrasonic transducers. Lock-in can be obtained by snap fit arrangements implemented in the 3D printing process. The flow tube insert comprises reflectors and optionally a measurement tube.

The reflector surface may preferably have a signal reflectivity that is higher than the signal absorptivity of the reflector material. An increase in the reflectivity of the reflector surface may be obtained in post processing of the reflector surface after the 3D printing powder bed fusion process. An increase in reflectivity is obtainable by further heat treatment or by chemical surface treatment of the reflector surface. Also a reflective coating layer can be applied to the reflective surface.

Advantageously the one or more cavities have an extension in an axial direction of the flow meter in the range of 0,1% to 100% of a width or diameter of the ultrasonic transducer. Different sizes of the cavities can be mixed in the sections with an acoustic impedance conditioner.

In order to withstand liquid or fluid pressure from within the flow tube, reinforcing ribs are placed on an outside or an inside of the flow tube. The preferably ring-shaped ribs are placed co-axially with an axially extending centreline of the flow tube. Alternatively linear ribs extending in an axial direction parallel with the centreline can be used. To increase the structural strength of the tube a PEEK/PA12 powder blend can be used, or PEEK blended with other polyamide powder types. The blend PEEK/PA12 is commercially available. The polymer powder blend may be a composite polymer comprising one or more fillers such as glass, carbon, or aluminium-based fillers. PPS is due to a high mechanical strength a suitable material for 3D printing the ultrasonic flow meter, especially a PPS based composite powder comprising 20-60 % glass or carbon filler is advantageous in that it combines high mechanical strength with and low dissolvability in water and low water ingress in the meter housing. The use of 3D printed powder material for an ultrasonic flow meter bears the risk of a greater inflow of water into the housing with electronics. Therefore a box containing a desiccant is placed inside the housing of the flow meter, said box being made in a 3D printing process and containing unsintered powder which functions as a desiccant.

The invention further concerns a method for manufacturing an ultrasonic flow meter comprising a housing, a flow tube, ultrasonic transducers and reflectors and is characterized in that one or more parts of the flow meter is manufactured in a powder bed fusion process such as selective laser sintering or multi jet fusion. The one or more parts comprise a section having cavities formed by disrupting the sintering process of a part at a first position of the part and continuing the sintering process at a second position of the part.

Advantageously the method can comprise the implementation of a reinforcing coating to the flow tube by such processes as chemical vapour deposition or immersion of the flow tube into a liquid comprising material for the reinforcing coating or by over moulding the flow tube with a reinforcing material. In a further improvement the surface of the housing or flow tube is surface treated by heat or by chemical means to avoid water ingress into the housing.

The invention also relates to a method of manufacturing an ultrasonic flow meter comprising a housing and a flow tube which are seamlessly and materially connected and manufactured by injection moulding, the flow meter further comprising a flow tube insert to be inserted in the flow tube. The method is characterized in that the flow tube insert is manufactured in a 3D printing process such as a selective laser sintering process (SLS) or a MultiJet fusion process (MJF) and that it incorporates at least one reflector.

The invention further relates to a method of manufacturing an ultrasonic flow meter comprising a housing, a flow tube and a flow tube insert comprising a measuring tube. The method is characterized in that all abovementioned elements are manufactured in the one and same 3D printing process such as a selective laser sintering process (SLS) or a MultiJet fusion process (MJF).

In the following further aspects of 3D printing of flow tubes and housings for flow meters are discussed.

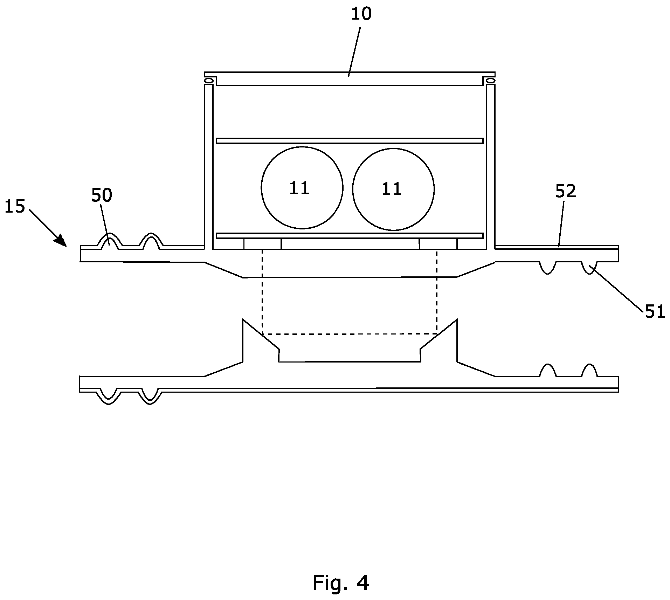

Flow meters experience water hammer caused by the sudden stop of pumps or the abrupt closing of valves. Their housings and tubes must be designed to withstand pressures momentarily reaching up to 100 bars. In normal operation, e.g. in residential areas, the water pressure is typically in the range of 3 to 6 bars. A housing and/or a flow tube manufactured in an SLS 3D printing process may in some applications not have the mechanical strength to withstand the pressures generated by water hammer because the polyamide powder or other plastic powders used, such as PA11 or PA12, are fused in a layer-by-layer process. The bonding obtained in the sintering process between the particles in the powder and between layers is not strong enough to withstand the destructive force of water hammer. The present invention alleviates this short coming by introducing structural reinforcements in a flow tube wall and/or in a wall of the housing as illustrated in fig. 4. Reinforcing ribs shaped as beads 50, 51 on the flow tube wall 7 gives a greater mechanical strength against high pressure burst coming from the inside of the flow tube. The ring-shaped rings 50, 51 are placed either on the outside of the flow tube wall or on its inside. The latter solution is preferred because it is invisible to the end user. The reinforcing ribs 50, 51 are an integral part of the flow tube wall 7 or the wall of the housing, and are formed by the SLS process. Instead of being continuous rings the reinforcing ribs can be formed as parts of a ring shape, e.g. only 90 degrees of a full circle. Alternatively, the reinforcing ribs can be linear, integrated in the flow tube wall and extend in the longitudinal direction of the flow tube.

As an alternative the flow meter housing may be strengthened by use of a reinforcing coating of the flow tube 52 and / or the housing 5 of the ultrasonic flow meter. The reinforcing coating may be added to the flow tube or flow meter housing by such processes as chemical vapour deposition or immersion of the flow tube into a liquid comprising material for the reinforcing coating or by over moulding the flow tube with a reinforcing material.

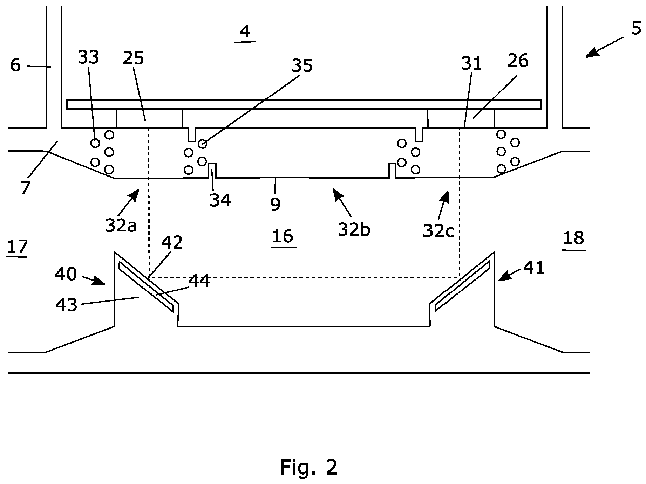

On fig. 4 a section with an acoustic impedance conditioner is not shown. An acoustic impedance conditioner may, however, be part of this embodiment as well. Any of the cavities illustrated on fig. 2, fig. 3 and fig. 6 and described in the context of those figures may be part of the embodiment according to fig. 4.

Once the structural strength of the flow tube and/or housing is ensured by the means just described the road is paved for utilizing the design advantages given by the combination of computer aided design and 3D printing. Thus, the flow meter can be customized and parameters like flow tube diameter, distance between the reflectors, distance between the piezoelectric transducers, distance between the piezoelectric transducer and the reflector can be optimized to obtain the product desired by the customer.

In a further embodiment the desired high-strength and hydrophobic characteristics of a conventionally manufactured flow tube and housing obtained by means of injection moulding are combined with a 3D printed manufactured flow tube insert. The flow tube insert is a part separate from the flow tube and extends in longitudinal direction of the flow tube and contains one, two or more reflectors and optionally a measurement tube. Manufacturing the flow tube insert in an SLS or MJF process, hereby using standard polymer powder materials, and manufacturing the flow tube and the housing in an injection moulding process, lets the advantages of both manufacturing processes meet when the parts are combined to a final ultrasonic flow meter. The flow tube insert does not have to fulfil the same high requirements to resistance against water hammer and water ingress as the flow tube and the housing. On one hand the flow tube and the housing has the desired mechanical strength and resistance towards water diffusion, on the other hand the flow tube insert is optimized and customized in its functional design as relates to e.g. built-in flow guides, reflectiveness of the ultrasonic signal from the reflector surface, slope of the reflector surface, distance between the reflectors or snap-in functionality of the flow tube insert.

### Description of the Drawings

In the following embodiments of the invention will be described with reference to the following figures:
Fig. 1 is a cut-away view of the inventive ultrasonic flow meter
Fig. 2 shows a first embodiment of the invention with acoustic decoupling
Fig. 3 shows a second embodiment of the invention with an acoustic grid
Fig. 4 shows a third embodiment of the invention with structural reinforcements
Fig. 5 shows a fourth embodiment of the invention with a box for a desiccant
Fig. 6 shows a fifth embodiment of the invention with a 3D printed flow tube insert

### Detailed Description of the Invention

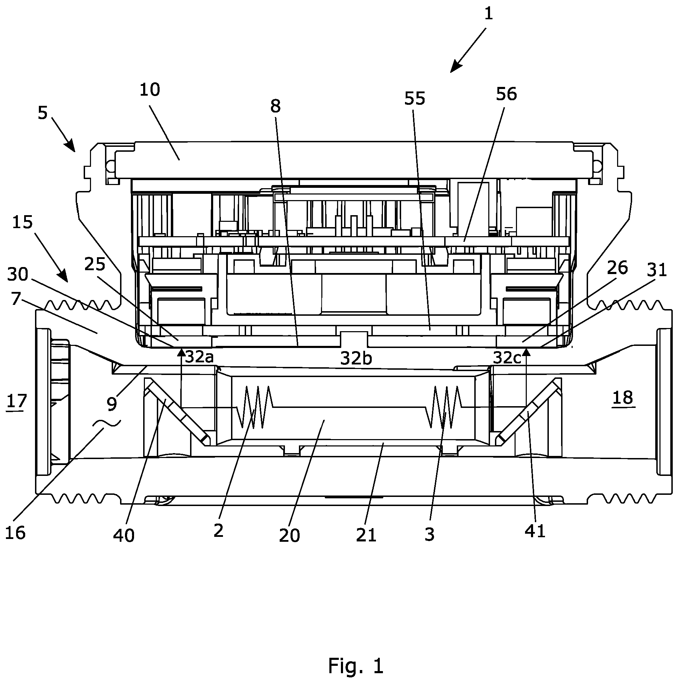

Referring to Fig. 1 an ultrasonic flow meter 1 for measuring the flowrate of a fluid based on transit times of opposite propagating ultrasonic signals 2, 3 is shown. The flow meter comprises a housing 5 and a flow tube 15 with a through-going opening 16 for passage of the fluid between an inlet and an outlet. Two ultrasonic transducers in the form of ultrasonic transducers 25, 26, (such as piezoelectric transducers) are arranged at the flow tube wall 7 for transmitting and receiving the ultrasonic signals through a fluid present inside the tube. The ultrasonic transducers are mounted on or connected to a printed circuit board 55 and operated by a control circuit 56. The control circuit is configured for operating the ultrasonic transducers to transmit and receive propagating ultrasonic signals and counter-propagating ultrasonic signals. The control circuit may also determine transit times between transmission and reception of the ultrasonic signals, and transit time differences between different ultrasonic signals. Here the transit time is considered as the time an ultrasonic wave front takes to traverse the fluid from the transmitting transducer to the receiving transducer. The flowrate of a fluid flowing through the flow tube may be determined by measuring the difference in transit times or phase difference of counter- and co propagating ultrasonic signals. The flow meter may be battery operated or mains powered. The housing 5 has an interior room 4 and is arranged to shield the transducers and control circuit from the surroundings and especially from exposure to humidity. The housing 5 has an opening which is closed off by a lid 10. Sealing means such as an O-ring is arranged between the lid 10 and the housing 5. A battery 11 may be arranged in the housing 5 of the ultrasonic flow meter especially in the interior room 4.

Ultrasonic transducers 25, 26 are arranged on an outer surface 8 of the flow tube wall 7. The ultrasonic transducers receive and transmit ultrasonic signals through the flow tube wall 7. Ultrasonic signals 2, 3 transmitted by the ultrasonic transducers travel along a signal transmission path through the flow tube wall 7 from the outer surface 8 to the inner surface 9 of the flow tube wall and into the fluid flowing in the through-going opening 16.

Ultrasonic signals transmitted from a transmitting transducer travel through the flow tube wall 7 at the position of the transmitting transducer, into the fluid flowing in the through-going opening 16, through the fluid in an axial direction, i.e. longitudinal direction along or parallel to the axial centreline X, and back into the flow tube wall at the position of a receiving transducer where the signal is received by the receiving transducer arranged at the outer surface 8 of the flow tube wall 7. In the same way ultrasonic signals are transmitted in the opposite direction. By analysing the received ultrasonic signals the flow velocity of the fluid can be determined by time of flight measurements or phase difference measurements. Reflectors 40, 41 may be arranged inside the flow tube to direct the ultrasonic signal through the flowing fluid along the flow path of the fluid.

The path of the ultrasonic signal as described above is the desired signal transmission path but a part of the ultrasonic signal may travel by different undesired paths. Signals received by the receiving transducers which have travelled along paths different from the desired signal transmission path are in the following referred to as error signals. An error signal may originate from part of the ultrasonic signal travelling between the transmitting and the receiving transducer in the flow tube wall 7 without travelling through the fluid in the through-going opening of the flow tube 15. Another error signal may also originate from parts of the ultrasonic signal which leaves the fluid of the flow tube 15 but is reflected inside the flow tube and re-enters the flow tube 15 at a position different from the position of the receiving transducer. Error signals may also arise from a transmitting transducer not stopping transmission instantly, also known as ringing, whereby an additional signal is transmitted, this additional signal is an error signal. This error signal may travel longitudinally along and inside the flow tube wall 7 and may arrive at the receiving transducer at the same time as the ultrasonic signal which has travelled through the fluid in the flow tube 15.

The ultrasonic transducers 25, 26 are arranged at the outer surface 8 of the flow tube wall 7 at transducer seats 30, 31, said seats being an integrated part of the flow tube wall 7. The transducer seats comprise a flat surface at the outer surface of the flow tube for receiving the ultrasonic transducers 25, 26. The inner surface 9 opposite of the flat surface of the transducer seats 30, 31 may be flat or may be shaped to focus the ultrasonic signal e.g. by having a parabolic shape.

According to the invention a section 32a of the flow tube wall 7 is adapted to provide an acoustic impedance conditioner between an ultrasonic transducer 25, the flow tube wall 7 and a fluid in the flow tube. Correspondingly an acoustic impedance conditioner section 32c matches the ultrasonic transducer 26 and the fluid, and a section 32b has the role of interfacing sections 32a and 32c. The acoustic impedance conditioner sections 32a, 32b and 32c are placed in the flow tube wall 7 between the outer surface 8 of the flow tube wall 7 and the inner surface 9 of said wall. The aspects of the acoustic conditioner sections 32a-c will be explained in the following by way of Fig. 2.

Fig. 2 shows in detail acoustic impedance conditioner sections 32a, 32b and 32c. The tasks of the sections are to minimize undesired signals travelling in longitudinal direction in the flow tube wall 7 from one transducer to the other and, as already described, to avoid or reduce scattered signals travelling through the fluid from one transducer to the other. Further, the section provides a signal transmission path between the transducer seats and the inner surface of the flow tube. The dimension of the signal transmission path is arranged such that the distance between the transducer seat and the inner surface of the flow tube optimizes impedance matching between the ultrasonic transduces, the wall of the flow tube and the fluid in the flow tube. To minimize the signal strength of error signals the transducer seat 30 is at least partly shielded or acoustically decoupled from the sections 32b and 32c by cavities 33 inside the flow tube wall 7. The cavities 33 are arranged spaced around the transducer seat 30 spanning a circumference of the transducer seat to create an acoustic barrier or at least a zone arranged to attenuate ultrasonic signals around the transducer seats and the signal transmission path. The acoustic barrier or attenuation zone comprises multiple cavities 33. The multiple cavities may include closed cavities 33 and/or open channels 34, said open channels 34 having openings towards the outer or inner surface of the flow tube. The cavities 33 and channels 34 are arranged spaced apart from each other to minimize weakening the mechanical strength of the flow tube wall 7. The cavities may be tubular shaped cavities 35 extending like rings all the way around the portion of the flow tube wall below the transducer seat or only partly surrounding the portion. The cavities surround and acoustically shields the signal transmission path from the rest of the flow tube wall 7. If the cavity is a tubular cavity then the diameter of the tube is preferably larger than the diameter of the ultrasonic transducer. Advantageously, an improved attenuation of the error signals is obtained by combining open channels 34 with tubular cavities 35 or with e.g. sphere shaped cavities 33.

The size of the cavities and the spacing between the cavities is preferably adapted to the wave length of the ultrasonic signal to optimize attenuation of the ultrasonic signal. Thus, the size and position of the cavities in the flow tube wall 7 are selected according to the frequency of the ultrasonic signal transmitted from the ultrasonic transducers and the propagation speed of sound in the material of the flow tube. The cavities 33 are advantageously placed above each other in a direction from the inner surface 9 to the outer surface 8. The cavities are not connected to each other but spaced apart by the 3D printed and thus sintered material. The cavities 33 in section 32a are placed outside the diameter of the ultrasonic transducer 25 and extend in the flow tube wall 7 in a direction towards the other ultrasonic transducer 26 and towards the wall 6 of the housing. By varying the extension of the cavities the attenuation of error signals can be increased. In principle only one impedance matching section 32a is sufficient because it will also dampen error signals originating from ultrasonic transducer 26. A better attenuation, however, is obtained with a further section, namely section 32c.

The frequency of the ultrasonic signals are typically in the range from 1- 2 MHz, however, other suitable frequencies may be used. The speed of sound in the flow tube wall depends on the material of the flow tube. The cavities may be arranged so that a distance between two cavities is less than the wave length of the ultrasonic signal in the flow tube wall. It may be preferred to keep the distance below half a wave length or even more preferably below one tenth of a wave length. Further, a spacing between two cavities may be shielded by another cavity arranged in a distance of less than 1 wave length from the spacing. Three or more cavities may be arranged to form a grid where one or more spacings between the cavities is less than 1 wave length or preferably less than half a wave length or even more preferably below one tenth of a wave length.

According to the invention, the flow tube or the combination of a flow tube and a meter housing is manufactured in a suitable three dimensional printing (3D) process such as SLS or MJF printing. The cavities 33, 35 may be empty, i.e. air filled, or may have internal supporting structures required by the 3D printing process. Alternatively the cavities 33, 35 are filled with unsintered powder material used in the 3D printing process. By leaving the powder unsintered in the cavities the amplitude of the signal is dampened due to loss of energy when signal reflections happen between the grains in the cavities. The average grain size of the powder is typically between 40 to 100 micrometres and by varying the size, shape or density of the grains in the powder in the cavities the signal attenuation can be customized. A preferred density interval of the powder giving good signal absorption is between 0,1 gram/cm3 to 5,0 gram/cm3.

The transducer seats 30, 31 described above may be replaced by transducer holes (not shown) in the flow tube wall 7, said hole creating an opening into the cavity of the flow tube 15. In the transducer holes membranes are arranged to shield the transducers from the fluid in the flow tube. The cavities 33, 35 inside the flow tube wall and channel 34 as described above will in that case be arranged around the transducer holes in the same way as described above around the transducer seats.

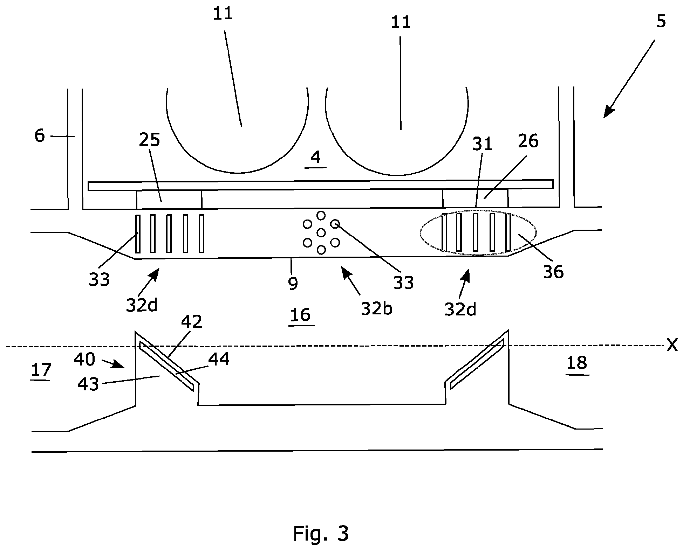

Fig. 3 shows an embodiment of the invention where the acoustic impedance of the signal transmission path is impacted. An acoustic impedance conditioning section 32d comprises cavities and/or other 3 dimensional structures arranged to focus or direct the ultrasonic signal. Cavities creating a focusing grid 36 form the impedance conditioning section 32d and guides acoustic waves propagating in a direction substantially perpendicular to the plane of the transducer seat and reflects or attenuates acoustic waves propagating in a direction not substantially perpendicular to the plane of the transducer seat. The cavities of the focusing grid 36 may be cylindrical or lamellar shaped or have other shapes arranged to guide or promote acoustic waves propagating in a direction perpendicular to the transducer seat. The grid may be arranged to form a matrix of solid elements and cavities. The dimensions of the grid are adapted to match the frequency of the ultrasonic signal used for flow measurements to achieve impedance matching and to avoid or minimize attenuation of the transmitted ultrasonic signal.

In a special embodiment of the invention an impedance matching section in the flow tube wall 7 of the flow meter has both a signal enhancing region and a signal attenuating region. This could for example be the focusing grid 36 enhancing the signal and the cavities 33,35 attenuating the signal.

Ultrasonic flow meters are often manufactured with a flow tube insert which is inserted in the flow tube. Instead of having a separate flow tube insert it can be integrated into the flow tube during manufacturing according to the invention. Fig. 2 and 3 show an ultrasonic flow meter 1 according to the invention where the flow tube insert is integrated seamlessly and materially with the flow tube wall 7. They cannot be taken apart. During printing the reflectors 40 and 41 are seamlessly connected to the flow tube wall 7 15, and the height of each reflector 40, 41 can be controlled independently during manufacture. Other parameters can be controlled individually by the software which controls the laser beam in the SLS process, such as the inclination of the reflector surface 42 of the reflectors. This inclination is typically 45 degrees but can be easily varied in the range of 5-85 degrees.

In Fig. 2 and 3 the reflectors are shown as cylindrical posts but they can be made in a variety shapes and cross sections, such as square, triangle, oval and elliptical. Especially the reflectors may be shaped to be optimized with respect to fluid dynamics to reduce pressure drop through the flow tube when fluid is flowing through the flow tube. The inclination is typically a linear inclination, but can in the 3D printing process be made curved, hereby obtaining exactly the desired reflection of the ultrasonic signal.

The reflector 40 comprises a reflector cavity 44 arranged behind or underneath the reflector surface 42, i.e. placed inside the reflector in-between the flow tube wall 7 and the reflector surface 42. The reflector cavity 44 will cause an acoustic impedance mismatch between the fluid in the flow tube 15 and the material of the reflector 40 which will increase the reflection of the ultrasonic signal. This is a desired result. The thickness of the reflector wall between the reflector surface 42 and the reflector cavity 44 as well as the inclination of the reflector surface 42 to the axial centreline X is adapted to achieve a desired angling of the reflected ultrasonic signal. The reflector cavity 44 may be empty / air filled or may have internal supporting structures required by the 3D printing process. The reflector cavity 44 may be filled with unsintered powder material from the 3D printing process. This loose powder increases the reflectivity of the reflector surface 42 by causing an acoustic impedance mismatch, hence lowering the loss of signal into the post of reflector 40.

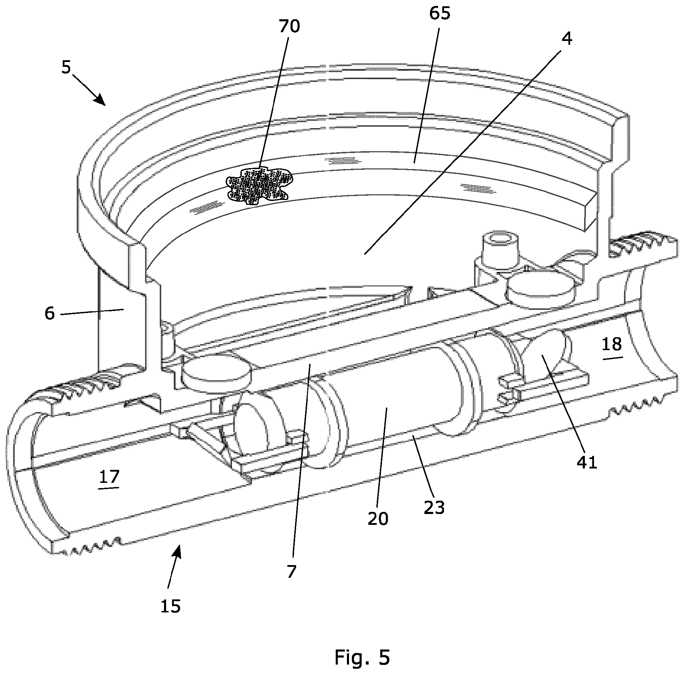

Fig. 5 shows a further embodiment of the invention. The housing 5 contains printed circuit boards (not shown in Fig. 5) which over time are subjected to moisture from ingress of water. The water passes through the flow tube wall 7 and through the wall 6 of the housing into the interior room 4 of the housing. Through the years several grams of water can be accumulated unless preventive measures are taken. A solution to this problem is the integration into the housing 5 of a box 65 with desiccant 70. The desiccant is uncured or unsintered 3D powder printing material such as polyamide PA12, a relatively inexpensive nylon powder. When the powder is in its unsintered state it will act as a desiccant an accumulate water molecules inside the box 65 instead of in the open room of the housing 5. Preferably the box 65 is fully closed and consisting of sintered 3D printed powder. The box 65 is thus consisting of the same material as the desiccant 70, but the latter is not sintered. In a variant of this embodiment the desiccant is of a different material than the box 65, for example bentonite which is an absorbent aluminium like clay. When the box 65 is close to finished in the printing process, the process is stopped and bentonite is filled into the box. The 3D printing process is then continued with e.g. PA12 powder on top of the bentonite and the PA12 powder is sintered and forming a lid of the box 65. As an alternative to bentonite the box may be filled with silica gel or another suitable desiccant. The box 65 can have openings allowing for better transport of water molecules. Also, the box 65 does not have to be placed on an inner wall of the wall 6 but can be shaped in any geometry and placed in openings or at positions which in traditional manufacture cannot be utilized. By utilizing dead spaces inside the housing 5 for a 3D printed box containing a desiccant, a physically smaller flow meter can be obtained. On fig. 5 a section with an acoustic impedance conditioner or reinforcements of the flow tube wall are not shown, these elements may, however, be part of this embodiment as well.

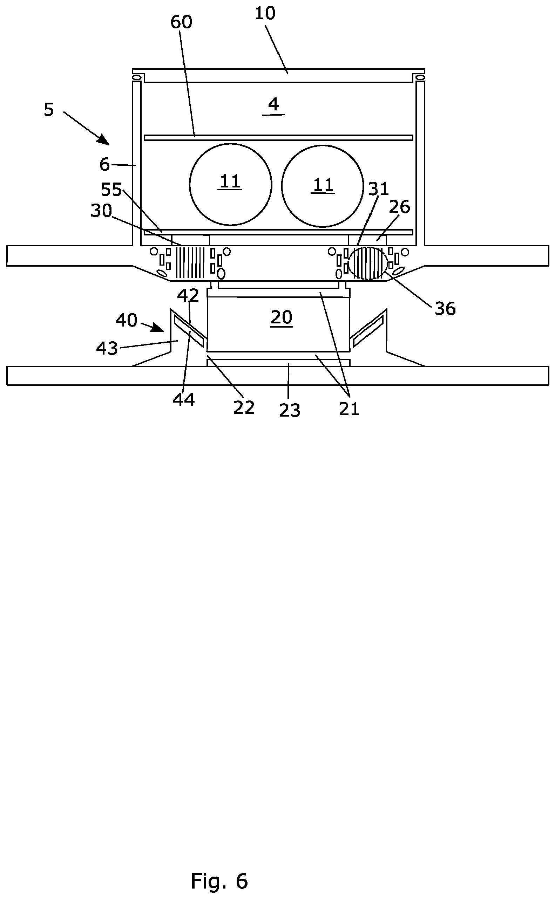

Fig. 6 shows an embodiment of the invention where a flow tube insert 22 comprising reflectors and an optional measuring tube 20 has been inserted into the flow tube. The flow tube insert is mechanical connected and locked to the wall of the flow tube by a snap lock function (not shown). The measuring tube 20 is extending between the reflectors 40, 41. A spacing 23 between the inner surface 9 of the flow tube wall 7 and a wall of the measuring tube 21 is arranged to be filled with the fluid flowing in the flow tube. The reflectors of the flow tube insert are mechanically connected by the measuring tube. If the flow tube insert has no measuring tube a connecting element (not shown) is arranged to mechanically connect the reflectors of the flow tube insert. The flow insert is manufactured by a 3D printing process. The flow insert including reflectors and measuring tube may be manufactured in the one and same 3D printing process to form a monolith. The reflectors of the flow tube insert are arranged with reflector cavities and inclinations as described above in relation to figs. 2 - 4.

### List of position numbers:

1 Ultrasonic flow meter
2 Ultrasonic signal
3 Ultrasonic signal
4 Interior room
5 Housing of the ultrasonic flow meter
6 Wall of the housing
7 Flow tube wall
8 Outer surface of the flow tube wall
9 Inner surface of the flow tube wall
10 Lid
11 Battery
15 Flow tube
16 Through-going opening of the flow tube
17 Inlet
18 Outlet
20 Measuring tube
21 Wall of the measuring tube
22 Flow tube insert
23 Spacing
25 Ultrasonic transducer
26 Ultrasonic transducer
30 Transducer seat
31 Transducer seat
32 Acoustic impedance conditioning section 32a, 32b, 32c and 32d
33 Cavity
34 Cavity in the shape of an open channel
35 Tubular shaped cavity
36 Focussing grid
40 Reflector 1
41 Reflector 2
42 Reflector surface
43 Acoustic impedance section in a reflector
44 Reflector cavity
45 Reflector wall
50 Rib shaped as bead
51 Rib shaped as bead
52 Reinforcing coating
55 Printed circuit board 1
56 Control circuit
60 Printed circuit board 2
65 Box for the desiccant
70 Desiccant

## Claims

1. An ultrasonic flow meter comprising:
- a flow tube (15) comprising an inlet (17), an outlet (18), a through-going opening (16) for passage of a fluid between the inlet and the outlet and a flow tube wall (7) with an inner surface (9) and an outer surface (8);
- transducer seats (30, 31) arranged at the outer surface (8) of the flow tube wall for receiving ultrasonic transducers; and
- ultrasonic transducers (25,26) arranged at the transducer seats for transmitting and receiving ultrasonic signals through the flow tube wall (7) into the fluid in the through-going opening,
**characterized in that**
the flow tube (15) or a part of the flow tube is manufactured in a 3D printing process and contains a section with an acoustic impedance conditioner (32a, 32b,32c, 43), said section having one or more cavities (33, 34, 35, 44) formed in the 3D printing process.

2. Ultrasonic flow meter according to claim 1 wherein the section is placed in the flow tube wall (7) at a position where the transducer seats (30, 31) are placed or close to the transducer seats.

3. Ultrasonic flow meter according to claim 2, wherein the one or more cavities in the flow tube wall (7) are arranged around a signal transmission path of the flow tube wall (7) to shield the ultrasonic transducer (25, 26) from acoustic waves traveling in the flow tube wall in a longitudinal direction between the inlet and the outlet of the flow tube.

4. Ultrasonic flow meter according to claims 1 or 2 wherein the cavities in the flow tube wall (7) are arranged inside a signal transmission path to create a focusing grid (36) to guide or promote acoustic waves propagating in a direction perpendicular to a plane spanned by the transducer seat (30,31) and/or to attenuate acoustic waves propagating in a direction not perpendicular to the plane spanned by the transducer seat.

5. Ultrasonic flow meter according to claims 3 to 4 wherein the section comprises cavities arranged in the flow tube wall (7) arranged around the signal transmission path of the flow tube wall (7) and cavities arranged inside the signal transmission path to create a focusing grid (36).

6. Ultrasonic flow meter according to any of the preceding claims wherein the flow tube (15) further comprises at least one reflector (40, 41) arranged in the through-going opening (16), the reflector having said section (43) placed underneath a reflector surface (42) which reflector surface consists of sintered powder material.

7. Ultrasonic flow meter according to claim 6 wherein the section (43) comprises a closed cavity (44) which is filled with unsintered powder and / or an open cavity which is accessible to the fluid of the through-going opening (16).

8. An ultrasonic flow meter according to any of claims 6 to 7, wherein the at least one reflector (40, 41) is seamlessly and materially integrated with the flow tube (15) and the reflecting surface (42) is a part of the inner surface (9) of the flow tube.

9. Ultrasonic flow meter according to any of the claims 6 to 8 wherein the reflector is part of a flow tube insert which is inserted into the through-going opening (16) and locked in a position below the signal transmission path of the ultrasonic transducers (25,26).

10. Ultrasonic flow meter according to any of the preceding claims wherein reinforcing ribs (50, 51) are placed on an outside or an inside of the flow tube (15), preferably ring-shaped ribs placed co-axially with an axially extending centreline (X) of the flow tube or alternatively linear ribs extending in an axial direction parallel with the centreline (X).

11. Ultrasonic flow meter according to any of the preceding claims further comprising a housing (5) wherein a box (65) containing a desiccant (70) is placed inside the housing (5) of the flow meter, said box being made in a 3D printing process and containing unsintered powder functioning as desiccant.

12. A method for manufacturing an ultrasonic flow meter comprising a housing (5), a flow tube (15), ultrasonic transducers (25,26) and reflectors (40,41) wherein one or more parts of the flow meter is manufactured in a powder bed fusion process such as selective laser sintering or multi jet fusion and **characterized in that** the one or more parts comprise a section (32a, 32b, 32c, 43) having cavities (33,34,35) formed by disrupting the sintering process of a part at a first position of the part and continuing the sintering process at a second position of the part.

13. A method according to claim 12 wherein a reinforcing coating (52) is applied to the flow tube by such processes as chemical vapour deposition or immersion of the flow tube (15) into a liquid comprising material for the reinforcing coating or by over moulding the flow tube with a reinforcing material.

14. Method according to claims 12 or 13 wherein a surface of the housing or the flow tube is surface treated by heat or by chemical means to avoid water ingress into the housing (5).

## Patentansprüche

1. Ultraschalldurchflussmesser, umfassend:
ein Strömungsrohr (15), das einen Einlass (17), einen Auslass (18), eine durchgehende Öffnung (16) für den Durchfluss eines Fluids zwischen dem Einlass und dem Auslass sowie eine Strömungsrohrwand (7) mit einer inneren Oberfläche (9) und einer äußeren Oberfläche (8) umfasst;
- Messwandlersitze (30, 31), die an der äußeren Oberfläche (8) der Strömungsrohrwand angeordnet sind, um Ultraschallmesswandler zu empfangen; und
- Ultraschallmesswandler (25, 26), die an den Messwandlersitzen angeordnet sind, um Ultraschallsignale durch die Durchflussrohrwand (7) hindurch in das Fluid in der durchgehenden Öffnung zu senden und zu empfangen, **dadurch gekennzeichnet, dass**
das Strömungsrohr (15) oder ein Teil des Strömungsrohrs in einem 3D-Druckprozess hergestellt ist und einen Abschnitt mit einem akustischen Impedanzkonditionierer (32a, 32b, 32c, 43) enthält, wobei der Abschnitt einen oder mehrere Hohlräume (33, 34, 35, 44) aufweist, die im 3D-Druckprozess gebildet werden.

2. Ultraschalldurchflussmesser nach Anspruch 1, wobei der Abschnitt in der Strömungsrohrwand (7) an einer Position angeordnet ist, an der sich die Messwandlersitze (30, 31) befinden oder in der Nähe der Messwandlersitze.

3. Ultraschalldurchflussmesser nach Anspruch 2, wobei der eine oder die mehreren Hohlräume in der Strömungsrohrwand (7) um einen Signalübertragungspfad der Strömungsrohrwand (7) herum angeordnet sind, um den Ultraschallwandler (25, 26) vor akustischen Wellen abzuschirmen, die sich in der Strömungsrohrwand in Längsrichtung zwischen dem Einlass und dem Auslass des Strömungsrohrs ausbreiten.

4. Ultraschalldurchflussmesser nach Anspruch 1 oder 2, wobei die Hohlräume in der Strömungsrohrwand (7) innerhalb eines Signalübertragungspfades angeordnet sind, um ein Fokussierungsgitter (36) zu erzeugen, um akustische Wellen, die sich in einer Richtung senkrecht zu einer vom Messwandlersitz (30, 31) aufgespannten Ebene fortschreiten, zu führen oder zu fördern und/oder um akustische Wellen, die sich in einer Richtung fortschreiten, die nicht senkrecht zu der vom Messwandlersitz aufgespannten Ebene ist, zu dämpfen.

5. Ultraschalldurchflussmesser nach einem der Ansprüche 3 bis 4, wobei der Abschnitt um den Signalübertragungspfad der Flussrohrwand (7) herum angeordnete Hohlräume in der Strömungsrohrwand (7) und innerhalb des Signalübertragungspfades angeordnete Hohlräume umfasst, um ein Fokussiergitter (36) zu erzeugen.

6. Ultraschalldurchflussmesser nach einem der vorstehenden Ansprüche, wobei das Strömungsrohr (15) ferner mindestens einen Reflektor (40, 41) umfasst, der in der durchgehenden Öffnung (16) angeordnet ist, wobei der Reflektor den Abschnitt (43) aufweist, der unter einer Reflektoroberfläche (42) angeordnet ist, wobei die Reflektoroberfläche aus gesintertem Pulvermaterial besteht.

7. Ultraschalldurchflussmesser nach Anspruch 6, wobei der Abschnitt (43) einen geschlossenen Hohlraum (44) umfasst, der mit ungesintertem Pulver gefüllt ist, und/oder einen offenen Hohlraum, der für das Fluid der durchgehenden Öffnung (16) zugänglich ist.

8. Ultraschalldurchflussmesser nach einem der Ansprüche 6 bis 7, wobei der mindestens eine Reflektor (40, 41) nahtlos und stoffschlüssig in das Strömungsrohr (15) integriert ist und die reflektierende Oberfläche (42) ein Teil der inneren Oberfläche (9) des Strömungsrohrs ist.

9. Ultraschalldurchflussmesser nach einem der Ansprüche 6 bis 8, wobei der Reflektor Teil eines Strömungsrohreinsatzes ist, der in die durchgehende Öffnung (16) eingesetzt und in einer Position unterhalb des Signalübertragungspfades der Ultraschallwandler (25, 26) verriegelt ist.

10. Ultraschalldurchflussmesser nach einem der vorstehenden Ansprüche, wobei Verstärkungsrippen (50, 51) an einer Außenseite oder einer Innenseite des Strömungsrohrs (15) angeordnet sind, vorzugsweise ringförmige Rippen, die koaxial zu einer sich axial erstreckenden Mittellinie (X) des Strömungsrohrs angeordnet sind, oder alternativ lineare Rippen, die sich in einer axialen Richtung parallel zu der Mittellinie (X) erstrecken.

11. Ultraschalldurchflussmesser nach einem der vorstehenden Ansprüche, ferner umfassend ein Gehäuse (5), wobei im Inneren des Gehäuses (5) des Durchflussmessers ein Kasten (65) angeordnet ist, der ein Trockenmittel (70) enthält, wobei der Kasten in einem 3D-Druckverfahren hergestellt ist und ungesintertes Pulver enthält, das als Trockenmittel dient.

12. Verfahren zur Herstellung eines Ultraschalldurchflussmessers, umfassend ein Gehäuse (5), ein Strömungsrohr (15), Ultraschallwandler (25, 26) und Reflektoren (40, 41), wobei ein oder mehrere Teile des Durchflussmessers in einem Pulverbettschmelzprozess wie selektives Lasersintern oder Multistrahlschmelzen hergestellt werden und **dadurch gekennzeichnet, dass** das eine oder die mehreren Teile einen Abschnitt (32a, 32b, 32c, 43) aufweisen, der Hohlräume (33, 34, 35) aufweist, die durch Unterbrechung des Sinterprozesses eines Teils an einer ersten Position des Teils und Fortsetzung des Sinterprozesses an einer zweiten Position des Teils gebildet werden.

13. Verfahren nach Anspruch 12, wobei eine Verstärkungsbeschichtung (52) auf das Strömungsrohr durch Verfahren wie chemische Gasphasenabscheidung oder Eintauchen des Strömungsrohrs (15) in eine Flüssigkeit, die Material für die Verstärkungsbeschichtung umfasst, oder durch Überformen des Strömungsrohrs mit einem Verstärkungsmaterial aufgebracht wird.

14. Verfahren nach Anspruch 12 oder 13, wobei eine Oberfläche des Gehäuses oder des Strömungsrohrs durch Hitze oder chemische Mittel oberflächenbehandelt wird, um das Eindringen von Wasser in das Gehäuse (5) zu verhindern.

## Revendications

1. Débitmètre à ultrasons comprenant :
- un tube d'écoulement (15) comprenant une entrée (17), une sortie (18), une ouverture traversante (16) permettant le passage d'un fluide entre l'entrée et la sortie et une paroi de tube d'écoulement (7) dotée d'une surface intérieure (9) et d'une surface extérieure (8) ;
- des logements de transducteur (30, 31) agencés sur la surface extérieure (8) de la paroi de tube d'écoulement permettant la réception de transducteurs à ultrasons ; et
- des transducteurs à ultrasons (25, 26) agencés au niveau des logements de transducteur permettant la transmission et la réception de signaux ultrasonores à travers la paroi de tube d'écoulement (7) dans le fluide dans l'ouverture traversante,
**caractérisé en ce que**
le tube d'écoulement (15) ou une partie du tube d'écoulement est fabriqué lors d'un processus d'impression 3D et contient une section munie d'un conditionneur d'impédance acoustique (32a, 32b, 32c, 43), ladite section présentant une ou plusieurs cavités (33, 34, 35, 44) formées lors du processus d'impression 3D.

2. Débitmètre à ultrasons selon la revendication 1, dans lequel la section est placée dans la paroi de tube d'écoulement (7) au niveau d'un emplacement où les logements de transducteur (30, 31) sont placés ou à proximité des logements de transducteur.

3. Débitmètre à ultrasons selon la revendication 2, dans lequel les une ou plusieurs cavités dans la paroi de tube d'écoulement (7) sont agencées autour d'un trajet de transmission de signal de la paroi de tube d'écoulement (7) pour protéger le transducteur à ultrasons (25, 26) des ondes acoustiques se déplaçant dans la paroi de tube d'écoulement dans une direction longitudinale entre l'entrée et la sortie du tube d'écoulement.

4. Débitmètre à ultrasons selon les revendications 1 ou 2, dans lequel les cavités dans la paroi de tube d'écoulement (7) sont agencées à l'intérieur d'un trajet de transmission de signal pour créer une grille de focalisation (36) pour guider ou favoriser les ondes acoustiques se propageant dans une direction perpendiculaire à un plan défini par le logement de transducteur (30, 31) et/ou pour atténuer les ondes acoustiques se propageant dans une direction non perpendiculaire au plan défini par le logement de transducteur.

5. Débitmètre à ultrasons selon les revendications 3 à 4, dans lequel la section comprend des cavités agencées dans la paroi de tube d'écoulement (7) agencée autour du trajet de transmission de signal de la paroi de tube d'écoulement (7) et des cavités agencées à l'intérieur du trajet de transmission de signal pour créer une grille de focalisation (36).

6. Débitmètre à ultrasons selon l'une quelconque des revendications précédentes, dans lequel le tube d'écoulement (15) comprend en outre au moins un réflecteur (40, 41) agencé dans l'ouverture traversante (16), le réflecteur présentant ladite section (43) placée en dessous d'une surface de réflecteur (42), laquelle surface de réflecteur consiste en un matériau en poudre frittée.

7. Débitmètre à ultrasons selon la revendication 6 dans lequel la section (43) comprend une cavité fermée (44) qui est remplie de poudre non frittée et/ou une cavité ouverte qui est accessible au fluide de l'ouverture traversante (16).

8. Débitmètre à ultrasons selon l'une quelconque des revendications 6 à 7, dans lequel l'au moins un réflecteur (40, 41) est parfaitement et matériellement intégré au tube d'écoulement (15) et la surface réfléchissante (42) fait partie de la surface intérieure (9) du tube d'écoulement.

9. Débitmètre à ultrasons selon l'une quelconque des revendications 6 à 8, dans lequel le réflecteur fait partie d'un insert de tube d'écoulement qui est inséré dans l'ouverture traversante (16) et verrouillé à un emplacement situé sous le trajet de transmission de signal des transducteurs à ultrasons (25, 26).

10. Débitmètre à ultrasons selon l'une quelconque des revendications précédentes, dans lequel des nervures de renforcement (50, 51) sont placées sur un extérieur ou un intérieur du tube d'écoulement (15), de préférence des nervures en forme d'anneau placées coaxialement à une ligne centrale s'étendant axialement (X) du tube d'écoulement ou, d'une autre manière, des nervures linéaires s'étendant dans une direction axiale parallèle à la ligne centrale (X).

11. Débitmètre à ultrasons selon l'une quelconque des revendications précédentes, comprenant en outre un boîtier (5) dans lequel une boîte (65) contenant un dessiccant (70) est placée à l'intérieur du boîtier (5) du débitmètre, ladite boîte étant réalisée lors d'un procédé d'impression 3D et contenant de la poudre non frittée servant de dessiccant.

12. Procédé de fabrication d'un débitmètre à ultrasons comprenant un boîtier (5), un tube d'écoulement (15), des transducteurs à ultrasons (25, 26) et des réflecteurs (40, 41), dans lequel une ou plusieurs parties du débitmètre sont fabriquées par un procédé de fusion sur lit de poudre tel que le frittage laser sélectif ou la fusion multijets et **caractérisé en ce que** les une ou plusieurs parties comprennent une section (32a, 32b, 32c, 43) présentant des cavités (33, 34, 35) formées en interrompant le processus de frittage d'une partie au niveau d'un premier emplacement de la partie et en poursuivant le processus de frittage au niveau d'un second emplacement de la partie.

13. Procédé selon la revendication 12, dans lequel un revêtement de renforcement (52) est appliqué au tube d'écoulement par des procédés tels que le dépôt chimique en phase vapeur ou l'immersion du tube d'écoulement (15) dans un liquide comprenant un matériau pour le revêtement de renforcement ou par surmoulage du tube d'écoulement avec un matériau de renforcement.

14. Procédé selon les revendications 12 ou 13, dans lequel une surface du boîtier ou du tube d'écoulement est traitée en surface par la chaleur ou par des moyens chimiques pour éviter l'entrée d'eau dans le boîtier (5).
